# EUROPEAN PATENT APPLICATION

(11) **EP 4 811 594 A1**
(43) Date of publication of application: **23.09.2026**
(21) Application number: 25816894.7
(22) Date of filing: 10.09.2025
(51) Int. Cl.: H02J 3/38, H02J 3/40

(54) **CURRENT-LIMITING METHOD AND APPARATUS BASED ON ACTIVE COMPENSATION, AND ELECTRONIC DEVICE AND CONVERTER**

(30) Priority: 27.09.2024 CN 202411362083
(71) Applicant: Xiamen Kehua Digital Energy Tech Co., Ltd., Xiamen, Fujian 361100 (CN)
(72) Inventor: LI, Jie, Xiamen, Fujian 361000 (CN); YI, Longqiang, Xiamen, Fujian 361000 (CN); ZENG, Chunbao, Xiamen, Fujian 361000 (CN); ZENG, Jin, Xiamen, Fujian 361000 (CN)
(74) Representative: Regimbeau
(86) International application number: PCT/CN2025/120254
(87) International publication number: WO 2026/067032

(57) **Abstract**

The invention provides a current limiting method and device based on active power compensation, an electronic device, and a converter. The current limiting method based on active power compensation includes the following operations. A present actual current value and a maximum permissible current value of a grid-connected converter are acquired. A current difference between the maximum permissible current value and the present actual current value is determined. An angular frequency compensation amount is determined according to the current difference, and the angular frequency compensation amount is negatively correlated with the current difference. An angular frequency reference value of the grid-connected converter is compensated according to the angular frequency compensation amount to obtain a compensated angular frequency reference value. Grid-forming control is performed on the grid-connected converter according to the compensated angular frequency reference value.

## Description

### CROSS-REFERENCES TO RELATED APPLICATIONS

The present disclosure is filed based on Chinese Patent Application No. 202411362083.9 filed on September 27, 2024, and claims priority to the Chinese Patent Application, the entire contents of which are hereby incorporated by reference in its entirety.

### TECHNICAL FIELD

The present disclosure relates to the technical field of grid-forming technologies, and in particular to a current limiting method and device based on active power compensation, an electronic device, and a converter.

### BACKGROUND

The widespread application of distributed renewable energy systems in power electronic power stations has led to a decrease in power grid damping and inertia, which weakens power grid's anti-interference capability. In order to solve this problem, a virtual synchronous generator (VSG) control strategy is proposed. By changing the control strategy of a converter, the converter can simulate inertia and damping characteristics of a synchronous generator, thereby suppressing fluctuations in frequency and output power. The converter using the control strategy is equivalent to a voltage source, which is a grid-forming converter.

Because the converter contains a large number of power electronic components, there will be a current limiting link in a control element of the converter to ensure the safe operation of the converter. Usually, the current limiting link for an output current is arranged between a voltage closed-loop control and a current closed-loop control. In this way, after current limiting is triggered, the converter using the VSG control strategy will change to current source control for output, losing voltage source characteristics, which easily lead to instability in a weak grid. Moreover, a limiting transient transition process of the converter is complex and power angle stability is poor.

### SUMMARY

The embodiments of the present disclosure provide a current limiting method and device based on active power compensation, an electronic device, and a converter, so as to solve the problems that an existing current limiting method causes the converter to lose its voltage source characteristics, makes the converter prone to instability under a weak grid, and results in a complex limiting transient transition process and poor power angle stability.

In a first aspect, an embodiment of the present disclosure provides a current limiting method based on active power compensation, which includes the following operations.

A present actual current value and a maximum permissible current value of a grid-connected converter are acquired.

A current difference between the maximum permissible current value and the present actual current value is determined.

An angular frequency compensation amount is determined according to the current difference, and the angular frequency compensation amount is negatively correlated with the current difference.

An angular frequency reference value of the grid-connected converter is compensated according to the angular frequency compensation amount to obtain a compensated angular frequency reference value.

Grid-forming control is performed on the grid-connected converter according to the compensated angular frequency reference value.

In a possible implementation, determining the angular frequency compensation amount according to the current difference includes the following operation.

Based on an inverse proportional function, the angular frequency compensation amount is determined according to the current difference.

In a possible implementation, determining the angular frequency compensation amount according to the current difference includes the following operations.

A d-axis current component actual value of the grid-connected converter is acquired.

A ratio of the d-axis current component actual value to the present actual current value is determined.

The angular frequency compensation amount is determined according to the ratio and the current difference. The angular frequency compensation amount is positively correlated with the ratio.

In a possible implementation, before determining the angular frequency compensation amount according to the current difference, the current limiting method based on active power compensation further includes the following operation.

The current difference is compared with a preset current limiting point threshold.

Accordingly, determining the angular frequency compensation amount according to the current difference includes the following operation.

When the current difference is less than the preset current limiting point threshold, the angular frequency compensation amount is determined according to the current difference.

In a possible implementation, after comparing the current difference with the preset current limiting point threshold, the current limiting method based on active power compensation further includes the following operation.

When the current difference is greater than or equal to the preset current limiting point threshold, the angular frequency compensation amount is determined to be 0.

In a possible implementation, compensating the angular frequency reference value of the grid-connected converter according to the angular frequency compensation amount to obtain the compensated angular frequency reference value includes the following operation.

The angular frequency compensation amount is subtracted from the angular frequency reference value of the grid-connected converter to obtain the compensated angular frequency reference value.

In a possible implementation, performing the grid-forming control on the grid-connected converter according to the compensated angular frequency reference value includes the following operations.

A phase angle reference value is determined according to the compensated angular frequency reference value.

A voltage amplitude reference value output from a voltage regulation control loop is acquired.

A three-phase voltage reference value is determined according to the phase angle reference value and the voltage amplitude reference value.

The three-phase voltage reference value is input into a voltage-current double closed-loop control loop to obtain a control quantity of the grid-connected converter.

The grid-forming control is performed on the grid-connected converter according to the control quantity of the grid-connected converter.

In a second aspect, an embodiment of the present disclosure provides a current limiting device based on active power compensation, which includes an acquisition module, a current difference determination module, a compensation amount determination module, a compensation module, and a current limiting control module.

The acquisition module is configured to acquire a present actual current value and a maximum permissible current value of a grid-connected converter.

The current difference determination module is configured to determine a current difference between the maximum permissible current value and the present actual current value.

The compensation amount determination module is configured to determine an angular frequency compensation amount according to the current difference. The angular frequency compensation amount is negatively correlated with the current difference.

The compensation module is configured to compensate an angular frequency reference value of the grid-connected converter according to the angular frequency compensation amount to obtain a compensated angular frequency reference value.

The current limiting control module is configured to perform grid-forming control on the grid-connected converter according to the compensated angular frequency reference value.

In a third aspect, an embodiment of the present disclosure provides an electronic device including a memory and a processor. The memory is configured to store a computer program, and the processor is configured to call the computer program from the memory and run the computer program to perform the current limiting method based on active power compensation as described in the first aspect or any possible implementation of the first aspect.

In a fourth aspect, an embodiment of the present disclosure provides a grid-forming converter including the electronic device as described in the third aspect.

In a fifth aspect, an embodiment of the present disclosure provides a computer-readable storage medium having a computer program stored therein. The computer program, when executed by a processor, implements the operations of the current limiting method based on active power compensation described in the first aspect or any possible implementation of the first aspect.

### BRIEF DESCRIPTION OF THE DRAWINGS

FIG. 1 is a typical VSG control block diagram.
FIG. 2 is a flowchart illustrating a current limiting method based on active power compensation according to an embodiment of the present disclosure.
FIG. 3 is an improved VSG control block diagram according to an embodiment of the present disclosure.
FIG. 4 is a diagram illustrating a correspondence between a current difference and an angular frequency compensation amount *ω_{c}* according to an embodiment of the present disclosure.
FIG. 5 is a structural diagram of a current limiting device based on active power compensation according to an embodiment of the present disclosure.
FIG. 6 is a diagram of an electronic device according to an embodiment of the present disclosure.

### DETAILED DESCRIPTION

The present disclosure is described more clearly below with reference to the specific embodiments. The following embodiments will help those skilled in the art to further understand the present disclosure, but are not intended to limit the present disclosure in any form. It should be noted that, for those skilled in the art, several variations and improvements may be made without departing from the concept of the present disclosure, which are all fall within the scope of protection of the present disclosure.

It should be understood that the term "comprising/including" used in the specification and claims of the present disclosure indicates presence of described features, entireties, steps, operations, elements, and/or components, but does not exclude presence or addition of one or more other features, entireties, steps, operations, elements, components, and/or collections thereof.

It should be further understood that the term "and/or" used in the specification and claims of the present disclosure indicates any combination and all possible combinations of one or more items listed in association, and includes the combinations.

In the descriptions of the specification and claims of the present disclosure, the terms "first", "second", "third", and the like are merely intended for a purpose of differentiated description, but shall not be understood as an indication or an implication of relative importance.

Referring to "an embodiment" or "some embodiments" or the like in the specification of the present disclosure means that one or more embodiments of the present disclosure include a specific feature, structure, or characteristic described with reference to the embodiment. Thus, phrases "in an embodiment", "in some embodiments", "in some other embodiments", "in some additional embodiments", and the like that appear in different parts in the specification do not necessarily mean referring to a same embodiment, but mean "one or more embodiments, but not all embodiments", unless otherwise specifically emphasized. Terms "including", "comprising", "having", and their variants all mean "including but are not limited to", unless otherwise specifically emphasized.

In addition, "multiple" mentioned in the embodiments of the present disclosure should be construed as two or more.

As mentioned above, in the related art, with the continuous improvement of the penetration rate of distributed renewable energy, more and more converters are connected to a power grid, which results in a significant reduction in the total damping and total inertia provided by a traditional generator in the power grid. As a result, when the power grid is faced with disturbances, a frequency change speed is accelerated and an anti-interference capability is reduced. In order to solve this problem, a concept of a VSG control technology is proposed. The control technology can imitate an operation mechanism of a synchronous generator, so that a grid-connected converter can provide power grid support and have inertia response and damping characteristics, provide power grid inertia performance, and provide frequency and voltage support for a system (i.e., power grid), thereby improving power grid stability.

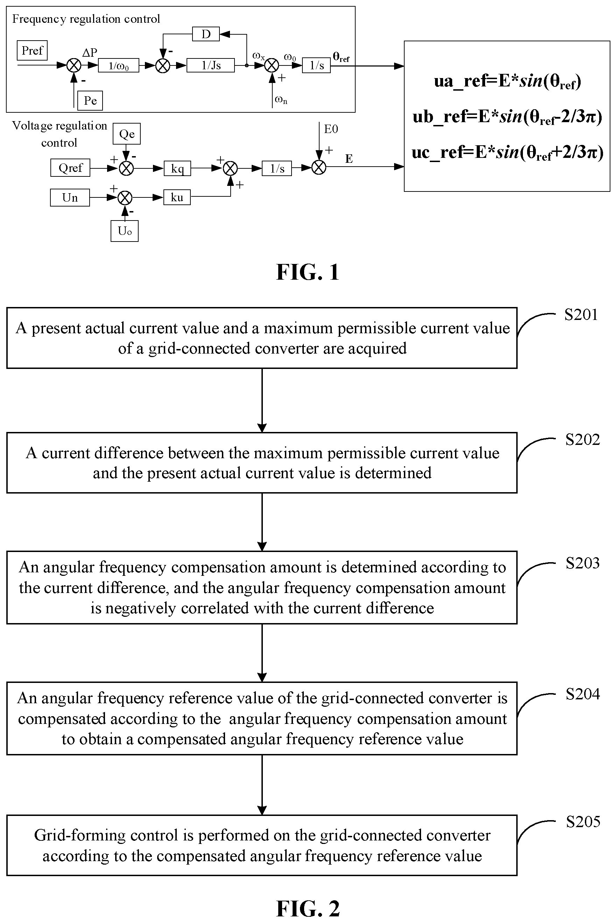

FIG. 1 is a typical VSG control block diagram. A control equation of a loop of a typical VSG is: $\left\{\begin{matrix}J \frac{{dω}_{0}}{dt} = \frac{{P}_{ref} - {P}_{e}}{{ω}_{0}} - D ⋅ \left({ω}_{0}-{ω}_{n}\right) \\ \frac{dE}{dt} = {k}_{q} ⋅ \left({Q}_{ref}-{Q}_{e}\right) + {k}_{u} ⋅ \left({U}_{n}-{U}_{o}\right)\end{matrix}\right.$
where *P_{ref}* and *Pₑ* are an output active power command (i.e., an active power reference value) and an output actual active power (i.e., an active power actual value), respectively; *Q_{ref}*and *Qₑ* are an output reactive power command (i.e., an reactive power reference value) and an output actual reactive power (i.e., a reactive power actual value), respectively; *ωₙ*, *ω*₀, *Uₙ* and *Uₒ* are an output voltage angular frequency rated value (i.e., a rated angular frequency), an output voltage angular frequency reference value (i.e., an angular frequency reference value), a power grid output voltage amplitude and a power grid rated voltage amplitude, respectively; *D*, *J*, *k_{q}* and *kᵤ* are a VSG frequency damping coefficient, a VSG virtual inertia coefficient, a VSG voltage droop coefficient and a VSG reactive inertia coefficient, respectively; and *E* is a VSG reactive power loop output excitation voltage (i.e., a voltage amplitude reference value).

In FIG. 1, Δ*P* = *P_{ref}* - *Pₑ* is a difference between the active power reference value and the active power actual value; *ωₓ* is a dynamic angular frequency output amount; θ_{ref} is a phase angle reference value; E0 is a voltage amplitude rated value; 1/s represents integral operation; ua_ref, ub_ref, and uc_ref are a A-phase voltage reference value, a B-phase voltage reference value, and a C-phase voltage reference value, respectively.

A usual current limiting link for an output current is arranged between a voltage closed-loop control and a current closed-loop control. When an output reference current of a voltage loop exceeds a certain threshold, the limiting link will play a role in changing an input reference current of a current loop, thereby limiting the current. Under normal circumstances, the current limiting control will not play a role. When the converter is greatly disturbed or in an unstable operating state, the current limiting control will be started to prevent the converter from generating an excessive current, and then a more complicated transient transition process will be caused. In this way, after current limiting is triggered, the VSG will change to current source control for output, losing voltage source characteristics, and easily causing instability in a weak grid. Moreover, the limiting transient transition process of the converter is complicated and power angle stability is poor.

In order to solve the above problems, an embodiment of the present disclosure provides a current limiting method based on active power compensation. The method modifies the VSG control block diagram and introduces an angular frequency compensation amount based on an inverse proportional function, so as to realize phase compensation and thereby achieve current limiting. This method can limit the current without changing the voltage source characteristics of the VSG, maintain a maximum power output capacity of the converter, and ensure a maximum power grid support capacity of the converter (i.e., a maximum capacity of the converter to support the power grid), thereby improving the power grid stability.

A current limiting method based on active power compensation according to an embodiment of the present disclosure will be described below with reference to FIG. 2 to FIG. 4. The embodiments of the present disclosure may be configured to be applicable to any scenario.

It should be noted that the embodiments of the present disclosure may be configured as an electronic device, and the electronic device may be a server, a computer, a controller, or the like. That is, the current limiting method based on active power compensation provided by an exemplary embodiment of the present disclosure may be performed on a device such as the server, the computer, or the controller.

It should be noted that the current limiting method based on active power compensation provided by an exemplary embodiment of the present disclosure may be performed on a same device or may be performed on different devices.

Referring to FIG. 2, FIG. 2 is a flowchart illustrating a current limiting method based on active power compensation according to an embodiment of the present disclosure. The above current limiting method based on active power compensation may include the following operations.

In S201, a present actual current value and a maximum permissible current value of a grid-connected converter are acquired.

In the embodiment, the present actual current value of the grid-connected converter may be acquired by a current sampling device.

The maximum permissible current value of the grid-connected converter may be set according to actual needs. For example, the maximum permissible current value may be a maximum current value capable of being carried by the grid-connected converter (i.e., a maximum current value that does not damage each component of the grid-connected converter).

In S202, a current difference between the maximum permissible current value and the present actual current value is determined.

The current difference Δ*I* is obtained by subtracting the present actual current value *iᵣₑₐₗ* from the maximum permissible current value *Iₘₐₓ*.

In S203, an angular frequency compensation amount is determined according to the current difference, and the angular frequency compensation amount is negatively correlated with the current difference.

When the current difference increases, the angular frequency compensation amount decreases. When the current difference decreases, the angular frequency compensation amount increases. That is, when the present actual current value decreases, causing an increase in the current difference obtained by subtracting the present actual current value from the maximum permissible current value, the angular frequency compensation amount will decrease. When the present actual current value increases, causing a decrease in the current difference obtained by subtracting the present actual current value from the maximum permissible current value, the angular frequency compensation amount will increase. That is, as the present actual current value approaches the maximum permissible current value, the compensation effect of the angular frequency becomes more significant.

In S204, an angular frequency reference value of the grid-connected converter is compensated according to the angular frequency compensation amount to obtain a compensated angular frequency reference value.

The angular frequency reference value of the grid-connected converter is *ω*₀ in FIG. 1, and a value of *ω*₀ is a sum of a dynamic angular frequency output amount *ωₓ* and a rated angular frequency *ωₙ*.

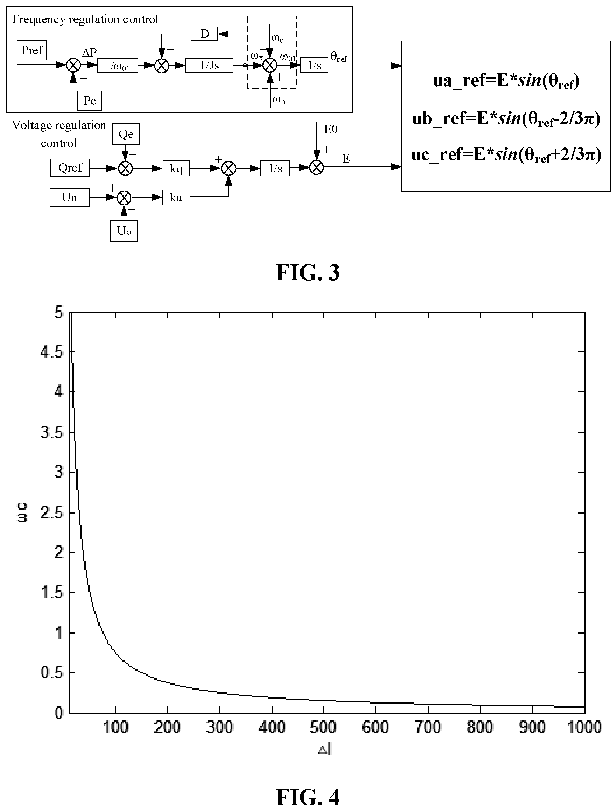

In the embodiment, the angular frequency reference value of the grid-connected converter is compensated by the angular frequency compensation amount, and the compensated angular frequency reference value is obtained. Referring to FIG. 3, the angular frequency compensation amount is *ω_{c},* and the compensated angular frequency reference value is *ω*₀₁.

In S205, grid-forming control is performed on the grid-connected converter according to the compensated angular frequency reference value.

The grid-connected converter is subjected to grid-forming control or VSG control based on the compensated angular frequency reference value, so as to achieve current limiting.

Specifically, referring to FIG. 1, when the angular frequency reference value of the grid-connected converter is not compensated according to the angular frequency compensation amount, if a frequency of the power grid suddenly changes, the frequency regulation control loop is used to adapt to the frequency change of the power grid. In a frequency regulation control loop in FIG. 1, only the dynamic angular frequency output amount *ωₓ* can change to accommodate the frequency change of the power grid. For example, assuming that the normal frequency of the power grid is 50Hz, if it suddenly increases to 60Hz due to some factors, only the dynamic angular frequency output amount *ωₓ* changes to accommodate the frequency change of the power grid, but the change of the dynamic angular frequency amount *ωₓ* may cause an increase in an active power or an active current.

In the method provided by the present disclosure, referring to FIG. 3, when the angular frequency reference value of the grid-connected converter is compensated according to the angular frequency compensation amount, if the frequency of the power grid suddenly changes, in the frequency regulation control loop in FIG. 3, both the dynamic angular frequency output amount *ωₓ* and the angular frequency compensation amount *ω_{c}* can change to accommodate the frequency change of the power grid. That is, the angular frequency compensation amount *ω_{c}* shares part of the work of the dynamic angular frequency output amount *ωₓ*, thereby preventing the active current from becoming excessively large due to the change of the dynamic angular frequency output amount *ωₓ* and achieving current limiting.

In the embodiments of the present disclosure, the angular frequency compensation amount is determined by the current difference between the maximum permissible current value and the present actual current value of the grid-connected converter, and the angular frequency reference value of the grid-connected converter is compensated according to the angular frequency compensation amount. Herein, the compensation of the angular frequency reference value is equivalent to the compensation of a phase angle reference value, and the angular frequency compensation amount is negatively correlated with the current difference. That is, the closer the present actual current value gets to the maximum permissible current value, the smaller the current difference, while the larger the angular frequency compensation amount and the more significant the compensation effect. Thus, pre-current limiting can be started before the present actual current value reaches the maximum permissible current value. The closer the present actual current value gets to the maximum permissible current value, the more significant the current limiting effect becomes, until the present actual current value can be limited, thereby achieving current limiting. With this the current limiting method, a current limiting response speed is fast, and the grid-connected converter still retains voltage source characteristics, which can maintain the maximum power output capacity of the converter, ensure the maximum power grid support capacity of the converter, thereby improving the power grid stability. In addition, in the related art, when the frequency of the power grid changes, only the dynamic angular frequency output amount in the frequency regulation control loop can be adjusted to accommodate the frequency change of the power grid. However, adjusting solely through the dynamic angular frequency output amount tends to cause an increase in current. In the present disclosure, the angular frequency compensation amount and the dynamic angular frequency output amount are used together for adjustment, and jointly share the task of accommodating the frequency change of the power grid, which prevents the excessive current corresponding to the dynamic angular frequency output amount, thereby achieving current limiting.

In the foregoing embodiments, the overall process of the current limiting method based on active power compensation is described. Next, a further introduction will be given on how to determine the angular frequency compensation amount according to the current difference.

In some embodiments, the above S203 may include the following operation.

Based on the inverse proportional function, the angular frequency compensation amount is determined according to the current difference.

In the embodiment, the angular frequency compensation amount and the current difference may have an inverse proportional relationship. In the inverse proportional relationship, the angular frequency compensation amount decreases as the current difference increases.

In some embodiments, the above S203 may include the following operations.

A d-axis current component actual value of the grid-connected converter is acquired.

A ratio of the d-axis current component actual value to the present actual current value is determined.

The angular frequency compensation amount according to the ratio and the current difference is determined. The angular frequency compensation amount is positively correlated with the ratio.

In the embodiment, the angular frequency compensation amount is negatively correlated with the current difference, and the angular frequency compensation amount is positively correlated with the ratio.

A d-axis current represents an active current, and in order to better achieve the purpose of limiting the d-axis current (i.e., the active current), the embodiment considers not only a factor of the current difference between the maximum permissible current value and the present actual current value, but also a factor of the ratio of the d-axis current component actual value to the present actual current value (i.e., a proportion of the d-axis current component actual value to the present actual current value). The larger the ratio, the larger the angular frequency compensation amount, so as to better achieve the purpose of limiting the d-axis current component.

In the embodiment, a formula for calculating the angular frequency compensation amount may be: ${ω}_{c} = G \left({i}_{real}\right) * H \left({i}_{d}\right) = \frac{K}{{I}_{max} - {i}_{real}} * H \left({i}_{d}\right)$; where *K* is a preset adjustment coefficient, which may be a constant, and its specific value may be set according to actual needs; *I*_{*ma*x} is a maximum permissible current value; *iᵣₑₐₗ* is a present actual current value; *i_{d}* is a d-axis current component actual value; *H*(*i_{d}*) is a ratio of the d-axis current component actual value to the present actual current value.

Referring to FIG. 4, FIG. 4 illustrates a correspondence between the current difference Δ*I* and the angular frequency compensation amount *ω_{c}*. The abscissa represents the current difference Δ*I*, and the ordinate represents the angular frequency compensation amount *ω_{c}*. As can be seen from FIG. 4, when the current difference Δ*I* tends to 0 (i.e., when the present actual current value infinitely approaches the maximum permissible current value), *G*(*iᵣₑₐₗ*) tends to infinity at this point, so that the angular frequency compensation amount *ω_{c}* also tends to infinity, and then phase compensation also tends to infinity. That is, as the present actual current value approaches the maximum permissible current value, the phase compensation effect becomes more significant.

In the embodiment, the current limiting using the inverse proportional function can achieve pre-limiting before reaching a current limiting point. The closer the actual current gets to the current limiting point, the more significant the current limiting effect is, until the actual current is limited. In addition, the method provided by the embodiments has no upper limit on the current limiting capability (i.e., the more serious the overcurrent, the more significant the current limiting effect). When the current difference Δ*I* is larger, the angular frequency compensation amount *ω_{c}* is smaller, which has little influence on the overall control loop. Moreover, the method provided by the embodiments has a dynamic adjustment process, and a final adjustment result enables the actual current to tend to the stable current limiting point.

In some embodiments, before the above S203, the current limiting method based on active power compensation may further include the following operation.

The current difference is compared with a preset current limiting point threshold.

Accordingly, determining the angular frequency compensation amount according to the current difference includes the following operation.

When the current difference is less than the preset current limiting point threshold, the angular frequency compensation amount is determined according to the current difference.

In some embodiments, after comparing the current difference with the preset current limiting point threshold, the current limiting method based on active power compensation further includes the following operation.

When the current difference is greater than or equal to the preset current limiting point threshold, the angular frequency compensation amount is determined to be 0.

In the embodiment, in order to ensure that the current limiting process does not affect the normal power in a steady state, the embodiment of the present disclosure adds a determination condition (i.e., determining whether the current difference is less than a preset current limiting point threshold). If the current difference is less than the preset current limiting point threshold, the angular frequency compensation amount is determined based on the above method. If the current difference is greater than or equal to the preset current limiting point threshold, the angular frequency compensation amount is determined to be 0.

When the current difference is less than the preset current limiting point threshold, it indicates that the present actual current value may be close to or greater than the maximum permissible current value. In this case, the purpose of current limiting needs to be achieved by the method in the foregoing embodiments. When the current difference is greater than or equal to the preset current limiting point threshold, it indicates that the present actual current value is less than the maximum permissible current value. In this case, there is no need to perform current limiting, and thus, the angular frequency compensation amount may be 0.

The preset current limiting point threshold is a constant, and its value can be set according to the actual needs. For example, the value can be set based on the actual operating conditions of different machine models. The value of the preset current limiting point threshold needs to meet that the angular frequency compensation amount exerts no impact when the converter is operating normally (i.e., when current limiting is not required).

In some embodiments, compensating the angular frequency reference value of the grid-connected converter according to the angular frequency compensation amount to obtain the compensated angular frequency reference value includes the following operation.

The angular frequency compensation amount is subtracted from the angular frequency reference value of the grid-connected converter to obtain the compensated angular frequency reference value.

Referring to FIG. 3, the compensated angular frequency reference value *ω*₀₁ is a difference obtained by subtracting the angular frequency compensation amount *ω_{c}* from the angular frequency reference value *ω*₀. The angular frequency reference value *ω*₀ is the sum of the dynamic angular frequency output amount *ωₓ* and the rated angular frequency *ωₙ*. Therefore, the compensated angular frequency reference value *ω*₀₁ is obtained by adding the dynamic angular frequency output amount *ωₓ* and the rated angular frequency *ωₙ*, and then subtracting the angular frequency compensation amount *ω_{c}.*

An control equation based on the control loop in FIG. 3 under an action of the angular frequency compensation amount *ω_{c}* becomes: $\left\{\begin{matrix}J \frac{{dω}_{01}}{dt} = \frac{{P}_{ref} - {P}_{e}}{{ω}_{01}} - D ⋅ \left({ω}_{01}-{ω}_{n}+{ω}_{c}\right) \\ \frac{dE}{dt} = {k}_{q} ⋅ \left({Q}_{ref}-{Q}_{e}\right) + {k}_{u} ⋅ \left({U}_{n}-{U}_{o}\right)\end{matrix}\right.$

The above control equation can be simplified to: $\left\{\begin{matrix}J \frac{{dω}_{01}}{dt} = \frac{{P}_{ref} - {P}_{e}}{{ω}_{01}} - D ⋅ \left({ω}_{01}-{ω}_{n}\right) - {Dω}_{c} \\ \frac{dE}{dt} = {k}_{q} ⋅ \left({Q}_{ref}-{Q}_{e}\right) + {k}_{u} ⋅ \left({U}_{n}-{U}_{o}\right)\end{matrix}\right.$

In some embodiments, performing the grid-forming control on the grid-connected converter according to the compensated angular frequency reference value includes the following operations.

A phase angle reference value is determined according to the compensated angular frequency reference value.

A voltage amplitude reference value output from a voltage regulation control loop is acquired.

A three-phase voltage reference value is determined according to the phase angle reference value and the voltage amplitude reference value.

The three-phase voltage reference value is input into a voltage-current double closed-loop control loop to obtain a control quantity of the grid-connected converter.

The grid-forming control is performed on the grid-connected converter according to the control quantity of the grid-connected converter.

Referring to FIG. 3, the phase angle reference value θ_{ref} can be obtained by performing integral operation on the compensated angular frequency reference value. The voltage amplitude reference value *E* can be obtained through the voltage regulation control loop. Therefore, the three-phase voltage reference value can be obtained based on the phase angle reference value θ_{ref} and the voltage amplitude reference value *E*, and the three-phase voltage reference value includes a A-phase voltage reference value ua_ref, a B-phase voltage reference value ub_ref and a C-phase voltage reference value uc_ref.

The three-phase voltage reference value is used as a voltage given value of a voltage control loop, thereby obtaining a current reference value. The current reference value is used as a current given value of a current control loop, thereby obtaining the control quantity of the grid-connected converter. Finally, the corresponding control is performed according to the control quantity of the grid-connected converter, so as to achieve the current limiting effect on the grid-connected converter.

Through relevant experiments, it is verified that when the frequency of the power grid changes from a normal 50 Hz to 48 Hz at a change rate of 1 Hz/s, if the current is not limited, an overcurrent fault occurs in the converter. When the frequency is changed from 48 Hz to 50 Hz at a change rate of 1 Hz/s, the method provided by the embodiments of the present disclosure is adopted, and in the process that the present actual current value of the converter approaches the maximum permissible current value, the angular frequency compensation amount *ω_{c}* is calculated and compensated into the loop control, the maximum current and the maximum power output are limited, and the converter is ensured to maintain full-load operation without overcurrent-induced grid tripping. During continuous operation at the frequency of 48Hz, the converter can still maintain current limiting and the maximum power output, so as to support the power grid with its maximum capacity.

In the current limiting method provided by the embodiments of the present disclosure, after the current limiting is triggered, the converter can still maintain the voltage source characteristics of the VSG without changing the control properties of the overall system. After the current limiting, the maximum power output capacity of the converter is maintained to ensure the maximum power grid support capacity of the converter. The current limiting method provided by the embodiments of the present disclosure has little change for the VSG control loop, making it easy to retrofit. Moreover, there is no impact on the system when the current limiting is not triggered. The current limiting response speed is fast, and it is effective for overcurrent phenomena caused by firm frequency response and inertia response.

It should be understood that sequence numbers of the operations do not mean an execution sequence in the foregoing embodiments. The execution sequence of the processes should be determined based on functions and internal logic of the processes, and should not constitute any limitation on the implementation processes of the embodiments of the present disclosure.

Device embodiments of the present disclosure are described as follows. For details not elaborately described in the device embodiments, please refer to the above corresponding method embodiments.

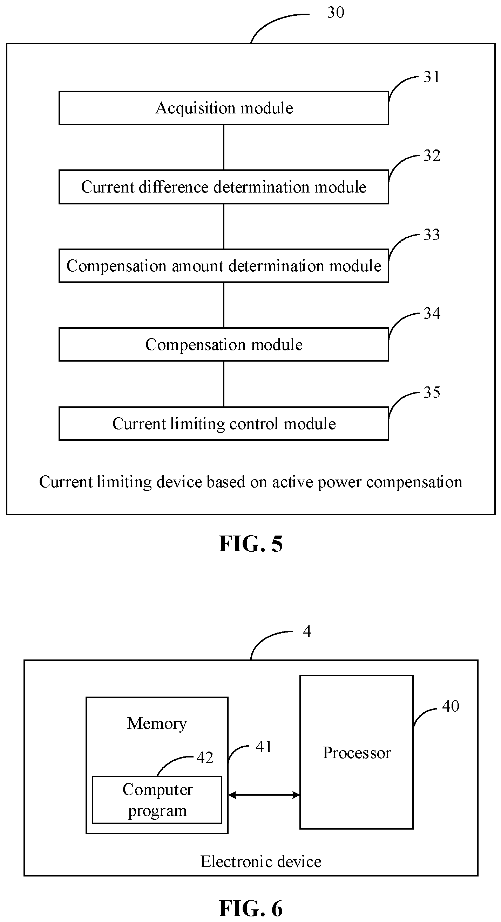

FIG. 5 is a structural diagram of a current limiting device based on active power compensation according to an embodiment of the present disclosure. For convenience of illustration, only parts related to the embodiments of the present disclosure are illustrated, which are described in detail as follows.

As illustrated in FIG. 5, the current limiting device 30 based on active power compensation may include an acquisition module 31, a current difference determination module 32, a compensation amount determination module 33, a compensation module 34, and a current limiting control module 35.

The acquisition module 31 is configured to acquire a present actual current value and a maximum permissible current value of a grid-connected converter.

The current difference determination module 32 is configured to determine a current difference between the maximum permissible current value and the present actual current value.

The compensation amount determination module 33 is configured to determine an angular frequency compensation amount according to the current difference. The angular frequency compensation amount is negatively correlated with the current difference.

The compensation module 34 is configured to compensate an angular frequency reference value of the grid-connected converter according to the angular frequency compensation amount to obtain a compensated angular frequency reference value.

The current limiting control module 35 is configured to perform grid-forming control on the grid-connected converter according to the compensated angular frequency reference value.

In a possible implementation, the compensation amount determination module 33 is further configured to:
determine, based on an inverse proportional function, the angular frequency compensation amount according to the current difference.

In a possible implementation, the compensation amount determination module 33 is further configured to:
acquire a d-axis current component actual value of the grid-connected converter;
determine a ratio of the d-axis current component actual value to the present actual current value; and
determine the angular frequency compensation amount according to the ratio and the current difference. The angular frequency compensation amount is positively correlated with the ratio.

In a possible implementation, the compensation amount determination module 33 is further configured to:
before determining the angular frequency compensation amount according to the current difference, compare the current difference with a preset current limiting point threshold; and
when the current difference is less than the preset current limiting point threshold, determine the angular frequency compensation amount according to the current difference.

In a possible implementation, the compensation amount determination module 33 is further configured to:
when the current difference is greater than or equal to the preset current limiting point threshold, determine the angular frequency compensation amount to be 0.

In a possible implementation, the compensation module 34 is further configured to:
subtract the angular frequency compensation amount from the angular frequency reference value of the grid-connected converter to obtain the compensated angular frequency reference value.

In a possible implementation, the current limiting control module 35 is further configured to:
determine a phase angle reference value according to the compensated angular frequency reference value;
acquire a voltage amplitude reference value output from a voltage regulation control loop;
determine a three-phase voltage reference value according to the phase angle reference value and the voltage amplitude reference value;
input the three-phase voltage reference value into a voltage- current double closed-loop control loop to obtain a control quantity of the grid-connected converter; and
perform the grid-forming control on the grid-connected converter according to the control quantity of the grid-connected converter.

FIG. 6 is a diagram of an electronic device according to an embodiment of the present disclosure. As illustrated in FIG. 6, the electronic device 4 in the embodiment includes a processor 40 and a memory 41. The memory 41 is configured to store a computer program 42, and the processor 40 is configured to call the computer program 42 from the memory 41 and run the computer program 42 to perform the operations in method embodiments for the current limiting method based on active power compensation, such as S201 to S205 illustrated in FIG. 2. Alternatively, the processor 40 is configured to call the computer program 42 from the memory 41 and run the computer program 42 to implement the functions of the modules/units in the above device embodiments, such as the functions of the modules illustrated in FIG. 5.

For example, the computer program 42 may be divided into one or more modules/units. The one or more modules/units are stored in the memory 41, and are executed by the processor 40, to complete the present disclosure. The one or more modules/units may be a series of computer program instruction segments that can implement a specific function, and the instruction segment may be used to describe an execution process of the computer program 42 in the electronic device 4. For example, the computer program 42 may be divided into various modules illustrated in FIG. 5.

The electronic device 4 may include but is not limited to the processor 40 and the memory 41. A person skilled in the art may understand that FIG. 6 is merely an example of the electronic device 4, and does not constitute a limitation on the electronic device 4. The electronic device may include more or fewer components than those illustrated in the figure, or some components may be combined, or different components may be used. For example, the electronic device may further include an input/output device, a network access device, a bus, or the like.

The processor 40 may be a central processing unit (CPU), or may be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like.

The memory 41 may be an internal storage unit of the electronic device 4, for example, a hard disk drive or an internal storage of electronic device 4. The memory 41 may also be an external storage device of the electronic device 4, for example, a removable hard disk, a smart media card (SMC), a secure digital (SD) card, a flash card, or the like that is provided on the electronic device 4. Further, the memory 41 may include both the internal storage unit and the external storage device that are of the electronic device 4. The memory 41 is configured to store the computer program and other programs and data required by the electronic device. The memory 41 may also be configured to temporarily store output data or to-be-output data.

It may be clearly understood by a person skilled in the art that, for convenient and brief description, division of the foregoing function units and modules is merely used as an example for illustration. In an actual application, the foregoing functions can be allocated to different function units and modules and implemented based on a requirement, that is, an inner structure of the device is divided into different function units and modules to implement all or some of the functions described above. Function units and modules in the embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units and modules are merely used to distinguish each other, and are not intended to limit the protection scope of the present disclosure. For a specific working process of the units and modules in the foregoing system, refer to a corresponding process in the foregoing method embodiments. Details are not described herein again.

Corresponding to the above electronic device, an embodiment of the present disclosure further provides a grid-forming converter including the above electronic device.

In the foregoing embodiments, descriptions of the embodiments have respective focuses. For a part that is not described in detail or recorded in an embodiment, refer to related descriptions in other embodiments.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

In the embodiments provided by present disclosure, it should be understood that the disclosed device/electronic device and method may be implemented in other manners. For example, the device/electronic device embodiments described above are merely schematic, for example, division into the modules or units is merely logical function division, and there may be another division manner during actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the embodiment solutions.

In addition, functional units in embodiments of the present disclosure may be integrated into one processing unit, each of the units may exist alone physically, or two or more units may be integrated into one unit. The integrated unit may be implemented in a form of hardware, or may be implemented in a form of a software functional unit.

When the integrated module/unit is implemented in a form of a software functional unit and sold or used as an independent product, the integrated module/unit may be stored in a computer-readable storage medium. Based on such an understanding, all or some of the processes of the method in embodiments of the present disclosure may be implemented by a computer program instructing related hardware. The computer program may be stored in a computer-readable storage medium. When the computer program is executed by the processor, the operations of the foregoing method embodiments for the current limiting method based on active power compensation may be implemented. The computer program includes computer program code. The computer program code may be in a source code form, an object code form, an executable file form, some intermediate forms, or the like. The computer-readable medium may include any entity or device capable of carrying the computer program code, a recording medium, a USB flash drive, a removable hard disk, a magnetic disk, or an optical disk, a computer memory, a read-only memory (ROM), a random access memory (RAM), an electrical carrier signal, a telecommunications signal, and a software distribution medium, and/or the like.

The foregoing embodiments are merely intended to describe the technical solutions of the present disclosure, but not to limit the present disclosure. Although the present disclosure is described in detail with reference to the foregoing embodiments, persons of ordinary skill in the art should understand that they may still make modifications to the technical solutions described in the foregoing embodiments or make equivalent replacements to some technical features thereof. However, these modifications and replacements do not depart the essence of the corresponding technical solutions from the spirit and scope of the technical solutions of each embodiment of the present disclosure, and should be included within the scope of protection of the present disclosure.

### INDUSTRIAL APPLICABILITY

In the technical solutions provided by the embodiments of the present disclosure, the angular frequency compensation amount is determined by the current difference between the maximum permissible current value and the present actual current value of the grid-connected converter, and the angular frequency reference value of the grid-connected converter is compensated according to the angular frequency compensation amount. Herein, the compensation of the angular frequency reference value is equivalent to the compensation of a phase angle reference value, and the angular frequency compensation amount is negatively correlated with the current difference. That is, the closer the present actual current value gets to the maximum permissible current value, the smaller the current difference, while the larger the angular frequency compensation amount and the more significant the compensation effect. Thus, pre-current limiting can be started before the present actual current value reaches the maximum permissible current value. The closer the present actual current value gets to the maximum permissible current value, the more significant the current limiting effect becomes, until the present actual current value can be limited, thereby achieving current limiting. With this the current limiting method, a current limiting response speed is fast, and the grid-connected converter still retains voltage source characteristics, which can maintain the maximum power output capacity of the converter, ensure the maximum power grid support capacity of the converter, thereby improving the power grid stability. In addition, in the related art, when the frequency of the power grid changes, only the dynamic angular frequency output amount in the frequency regulation control loop can be adjusted to accommodate the frequency change of the power grid. However, adjusting solely through the dynamic angular frequency output amount tends to cause an increase in current. In the present disclosure, the angular frequency compensation amount and the dynamic angular frequency output amount are used together for adjustment, and jointly share the task of accommodating the frequency change of the power grid, which prevents the excessive current corresponding to the dynamic angular frequency output amount, thereby achieving current limiting.

## Claims

1. A current limiting method based on active power compensation, comprising:
acquiring a present actual current value and a maximum permissible current value of a grid-connected converter;
determining a current difference between the maximum permissible current value and the present actual current value;
determining an angular frequency compensation amount according to the current difference, wherein the angular frequency compensation amount is negatively correlated with the current difference;
compensating an angular frequency reference value of the grid-connected converter according to the angular frequency compensation amount to obtain a compensated angular frequency reference value; and
performing grid-forming control on the grid-connected converter according to the compensated angular frequency reference value.

2. The method of claim 1, wherein determining the angular frequency compensation amount according to the current difference comprises:
determining, based on an inverse proportional function, the angular frequency compensation amount according to the current difference.

3. The method of claim 1, wherein determining the angular frequency compensation amount according to the current difference comprises:
acquiring a d-axis current component actual value of the grid-connected converter;
determining a ratio of the d-axis current component actual value to the present actual current value; and
determining the angular frequency compensation amount according to the ratio and the current difference, wherein the angular frequency compensation amount is positively correlated with the ratio.

4. The method of claim 1, wherein before determining the angular frequency compensation amount according to the current difference, the current limiting method based on active power compensation further comprises:
comparing the current difference with a preset current limiting point threshold;
determining the angular frequency compensation amount according to the current difference comprises:
when the current difference is less than the preset current limiting point threshold, determining the angular frequency compensation amount according to the current difference.

5. The method of claim 4, wherein after comparing the current difference with the preset current limiting point threshold, the current limiting method based on active power compensation further comprises:
when the current difference is greater than or equal to the preset current limiting point threshold, determining the angular frequency compensation amount to be 0.

6. The method of any one of claims 1 to 5, wherein compensating the angular frequency reference value of the grid-connected converter according to the angular frequency compensation amount to obtain the compensated angular frequency reference value comprises:
subtracting the angular frequency compensation amount from the angular frequency reference value of the grid-connected converter to obtain the compensated angular frequency reference value.

7. The method of any one of claims 1 to 6, wherein performing the grid-forming control on the grid-connected converter according to the compensated angular frequency reference value comprises:
determining a phase angle reference value according to the compensated angular frequency reference value;
acquiring a voltage amplitude reference value output from a voltage regulation control loop;
determining a three-phase voltage reference value according to the phase angle reference value and the voltage amplitude reference value;
inputting the three-phase voltage reference value into a voltage-current double closed-loop control loop to obtain a control quantity of the grid-connected converter; and
performing the grid-forming control on the grid-connected converter according to the control quantity of the grid-connected converter.

8. A current limiting device based on active power compensation, comprising:
an acquisition module, configured to acquire a present actual current value and a maximum permissible current value of a grid-connected converter;
a current difference determination module, configured to determine a current difference between the maximum permissible current value and the present actual current value;
a compensation amount determination module, configured to determine an angular frequency compensation amount according to the current difference, wherein the angular frequency compensation amount is negatively correlated with the current difference;
a compensation module, configured to compensate an angular frequency reference value of the grid-connected converter according to the angular frequency compensation amount to obtain a compensated angular frequency reference value; and
a current limiting control module, configured to perform grid-forming control on the grid-connected converter according to the compensated angular frequency reference value.

9. An electronic device, comprising a memory and a processor, wherein the memory is configured to store a computer program, and the processor is configured to call the computer program from the memory and run the computer program, to perform the current limiting method based on active power compensation of any one of claims 1 to 7.

10. A grid-forming converter, comprising the electronic device of claim 9.
